(19) Europäisches Patentamt
European Patent Office
Office européen des brevets

(11) Veröffentlichungsnummer : **0 412 364 B1**

# (12) EUROPÄISCHE PATENTSCHRIFT

(45) Veröffentlichungstag der Patentschrift : **03.11.93 Patentblatt 93/44**

(51) Int. Cl.$^5$ : **A01N 47/28,** A01N 33/18

(21) Anmeldenummer : **90114334.7**

(22) Anmeldetag : **26.07.90**

(54) **Synergistische Mischung aus einem Harnstoff- und einem Diphenyletherderivat zur Abszission von Pflanzenteilen.**

(30) Priorität : **07.08.89 DE 3926057**

(43) Veröffentlichungstag der Anmeldung : **13.02.91 Patentblatt 91/07**

(45) Bekanntmachung des Hinweises auf die Patenterteilung : **03.11.93 Patentblatt 93/44**

(84) Benannte Vertragsstaaten : **BE CH DE DK ES FR GB GR IT LI NL**

(56) Entgegenhaltungen :
**EP-A- 0 236 273**
**DE-A- 2 506 690**
**DE-A- 2 527 394**

(73) Patentinhaber : **BASF Aktiengesellschaft**
**Carl-Bosch-Strasse 38**
**D-67063 Ludwigshafen (DE)**

(72) Erfinder : **Grossmann, Klaus, Dr.**
**Wilhelm-Busch-Strasse 5**
**D-6703 Limburgerhof (DE)**

**EP 0 412 364 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft eine synergistisch wirkende Mischung aus einem Harnstoffderivat I und einem Diphenyletherderivat II zur Abszission von Pflanzenteilen.

Harnstoffe der Formel I

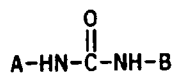 (I),

in der A für einen heteroaromatischen Rest A-1 bis A-3

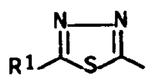

A-1

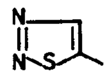

A-2

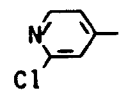

A-3

oder einen substituierten Phenylrest A-4

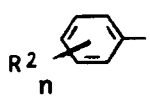

A-4

steht, wobei $R^1$ Wasserstoff oder Methyl, $R^2$ Fluor, Chlor oder Brom und n eine Zahl 1, 2 oder 3 bedeuten und in der B für einen Cyclopentyl- oder Cyclohexylrest oder einen unsubstituierten oder ein- bis dreifach durch Fluor, Chlor oder Brom substituierten Phenylrest steht, sind als Abszissionsmittel bekannt. Als Beispiel sei das Thidiazuron genannt, das die chemische Bezeichnung N-Phenyl-N'-(1,2,3-thiadiazol-5-yl)-harnstoff hat (vgl. DE-OS 25 06 690 und 26 19 861).

Bei Pflanzenschutz- und Pflanzenbehandlungsmitteln der Formel I ist es grundsätzlich wünschenswert, die spezifische Wirkung und die Wirkungssicherheit zu erhöhen. Es ist daher eine Aufgabe der Erfindung, ein Mittel anzugeben, mit dem die Wirkung bekannter Mittel verstärkt wird.

Die Wirkstoffe der Formel I zeigen insbesondere bei tiefen Temperaturen Schwankungen in der Wirksamkeit, insbesondere eine Erhöhung der Wirkungsgeschwindigkeit bei tiefen Temperaturen würde die Wirkungssicherheit verbessern.

Besonders bei Baumwolle, aber auch bei Citrus, Oliven und Kern- und Steinobstsorten sind Absissionsmittel zur Ernteerleichterung von Interesse.

Die Verwendung von Diphenyletherderivaten II, z.B. dem 5-[2-Chlor-4-trifluormethyl)phenoxy]-2-nitrobenzoesäure-natriumsalz zusammen mit Chinolinderivaten zur Regulierung des Längenwachstums von Pflanzen, geht aus der EP-A- 208 245 (DE-A-35 24 319) hervor. Die herbizide Wirksamkeit von Diphenyletherderivaten II ist aus verschiedenen Publikationen z.B. aus US-A 4 036 929, DE-A-23 11 638, EP-A-0 040 898 oder EP-A 3416 bekannt. In der EP-A-0 001 427 ist beschrieben, daß ein speziell substituierter Diphenylether, nämlich der 2,6-Dichlor-3'-fluor-4-trifluormethyl-6'-nitrodiphenylether, eines Desikkations- und Defolianswirkung bei Baumwollpflanzen aufweist.

Es wurde nun gefunden, daß synergistische Mischungen, die einen wirksamen Gehalt an

a) mindestens einem Harnstoffderivat der Formel I

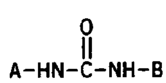 (I),

in der A für einen heteroaromatischen Rest A-1 bis A-3

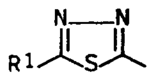 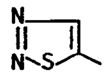 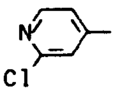

A-1 A-2 A-3

oder einen substituierten Phenylrest A-4

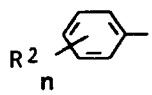

A-4

steht, wobei $R^1$ Wasserstoff oder Methyl, $R^2$ Fluor, Chlor oder Brom und n eine Zahl 1, 2 oder 3 bedeuten und in der B für einen Cyclopentyl- oder Cyclohexylrest oder einen unsubstituierten oder ein- bis dreifach durch Fluor, Chlor oder Brom substituierten Phenylrest steht sowie
b) mindestens einem Diphenyletherderivat der Formel II

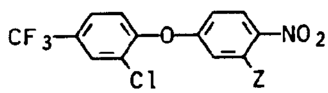 (II),

in der Z für einen Rest

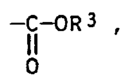 , 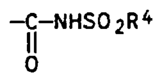

oder $OR^4$
steht, worin $R^3$ Wasserstoff, ein Alkalimetall- oder Erdalkalimetallion, gegebenenfalls substituiertes Ammonium, Alkyl mit 1 bis 4 C-Atomen oder Alkoxycarbonylalkyl mit insgesamt 1 bis 6 C-Atomen und $R^4$ Alkyl mit 1 bis 4 C-Atomen bedeuten, wobei die Komponenten I und II im Gew.-Verhältnis 1 : 0,01 bis 1 : 50 enthalten sind, aufweisen, besonders vorteilhaft zur Abszission von Pflanzenorganen, insbesondere zur Entblätterung von Baumwolle, eingesetzt werden können.

Der Rest $R^3$ in den Verbindungen II steht insbesondere für Wasserstoff oder Natrium oder für eine Ethoxycarbonylmethyl- oder eine Ethoxycarbonyleth-2-yl-gruppe. Anstelle der Säure im Fall von $R^3$ = H können auch die entsprechenden Alkalimetall, Ammonium- oder Erdalkalimetallsalze verwendet werden. Alkalimetallsalze sind z.B. Lithium, Natrium und Kaliumsalze, Erdalkalimetallsalze sind z.B. Magnesium- oder Calciumsalze. Im Fall der Ammoniumsalze steht $R^3$ z.B. für das nicht substituierte Ammoniumion wie auch für Ammoniumionen in denen 1, 2 oder alle 3 Wasserstoffatome durch Substituenten wie verzweigte oder unverzweigte Alkylreste mit jeweils 1 bis 4 C-Atomen, die ggf. substituiert sind durch Halogen (Cl, Br), Hydroxy oder $C_1$-$C_4$-Alkoxi, ersetzt sind oder in denen zwei der Alkylreste miteinander verbunden sind zu einem Fünf- oder Sechsring der gegebenenfalls ein weiteres Heteroatom wie Sauerstoff oder Stickstoff enthält.

Weiterhin hat $R^3$ die Bedeutung einer $C_1$-$C_4$-Alkylgruppe wie Methyl, Ethyl, Propyl, Isopropyl oder Butyl oder einer $C_1$-$C_6$-Alkoxycarbonylalkylgruppe, z.B. einer $C_1$-$C_3$-Alkoxycarbonyl-$C_1$-$C_2$-alkylgruppe wie Methoxycarbonylmethyl, Methoxycarbonylethyl, Ethoxycarbopxylethyl, Propoxycarbonylmethyl und insbesondere Ethoxycarbonylmethyl sowie Ethoxycarbonyleth-2-yl.

$R^4$ steht für eine $C_1$-$C_4$-Alkylgruppe, z.B. für Methyl, Ethyl, Propyl oder Butyl, insbesondere für Ethyl und Methyl.

Beispielsweise seien folgende Diphenyletherderivate aufgeführt:

| Nr. | Struktur | Common name |
|---|---|---|
| II.1 | 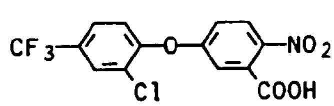 | Acifluorfen |

| Nr. | Struktur | Common name |
|---|---|---|
| II.2 | 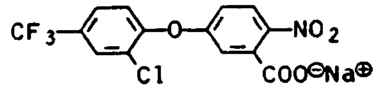 | Acifluorfen-Natrium |
| II.3 | 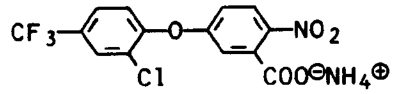 | |
| II.4 | 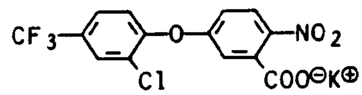 | |
| II.5 | 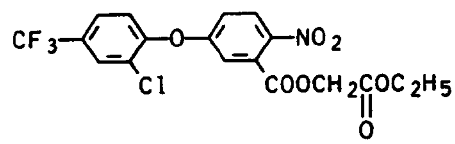 | Fluoroglycofen |
| II.6 | 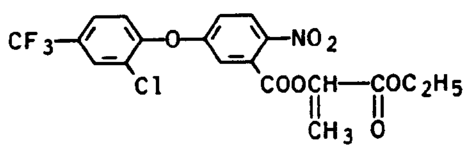 | Lactofen |
| II.7 | 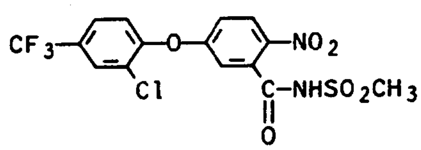 | Fomesafen |
| II.8 | 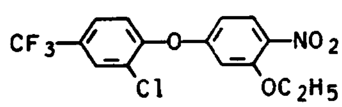 | Oxifluorfen |

Die Diphenyletherderivate II sind handelsübliche Verbindungen oder können wie im eingangs zitierten Stand der Technik beschrieben hergestellt werden.

In den erfindungsgemäßen Mischungen liegt das Mischungsverhältnis der Komponenten I und II (jeweils bezogen auf Gewichtsteile) bei 1:0,01 bis 1:50, insbesondere bei 1:0,2 bis 1:20, besonders bevorzugt bei 1:0,2 bis 1:10.

Besonders vorteilhafte Mischungen enthalten die Wirkstoffe N-Phenyl-N'-1,2,3-thiadiazol-5-yl)harnstoff I.1 (bekannt unter dem Warenzeichen Dropp®, Common name: Thidiazuron) und 5-[2-Chlor-4-trifluormethyl)phenoxy]-2-nitrobenzoesäure II.1 oder dessen Natriumsalz (bekannt unter dem Warenzeichen Blazer®) oder I.1 und 5-[2-Chlor-4-trifluormethyl)phenoxy]-2-nitrobenzoesäure-(ethoxycarbonylmethyl)ester II.5 (bekannt unter dem Warenzeichen Superblazer®), wobei die Komponenten I.1 und II.1 bzw. I.1 und II.5 vorteilhaft im Gewichtsverhältnis von jeweils 1:0,2 bis 1:10 enthalten sind.

Die erforderlichen Aufwandmengen an reiner Wirkstoffmischung, d.h. ohne Formulierungshilfsmittel, ist abhängig von der Zusammensetzung des Pflanzenbestandes, vom Entwicklungsstadium der Pflanzen, von den klimatischen Verhältnissen am Einsatzort sowie von der Anwendungstechnik. Im allgemeinen betragen die Aufwandmengen an Harnstoffderivat I 0,001 bis 3 kg/ha, insbesondere 0,1 bis 1 kg/ha und an Diphenyletherderivat II 0,001 bis 3 kg/ha, insbesondere 0,01 bis 3 kg/ha, wobei in der Regel eine Gesamtaufwandmenge

von ca. 4 kg Wirkstoffmischung pro Hektar nicht überschritten wird.

Die erfindungsgemäßen Mischungen können beispielsweise in Form von direkt versprühbaren Lösungen, Pulvern, Suspensionen, auch hochprozentigen wäßrigen, öligen oder sonstigen Suspensionen oder Dispersionen, Emulsionen, Öldispersionen, Pasten, Stäubemitteln, Streumitteln oder Granulaten durch Versprühen, Vernebeln, Verstäuben, Verstreuen oder Gießen angewendet werden. Die Anwendungsformen richten sich ganz nach den Verwendungszwecken; sie sollten in jedem Fall möglichst die feinste Verteilung der Wirkstoffe gewährleisten.

Zur Herstellung von direkt versprühbaren Lösungen, Emulsionen, Pasten oder Öldispersionen kommen Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z.B. Benzol, Toluol, Xylol, Paraffin, Tetrahydronaphthalin, alkylierte Naphthaline oder deren Derivate, z.B. Methanol, Ethanol, Propanol, Butanol, Chloroform, Tetrachlorkohlenstoff, Cyclohexanol, Cyclohexanon, Chlorbenzol, Isophoron, stark polare Lösungsmittel, wie z.B. Dimethylformamid, Dimethylsulfoxid, Nmethylpyrrolidon, Wasser, in Betracht.

Wäßrige Anwendungsformen können aus Emulsionskonzentraten, Pasten oder netzbaren Pulvern (Spritzpulvern, Öldispersionen) durch Zusatz von Wasser bereitet werden. Zur Herstellung von Emulsionen, Pasten oder Öldispersionen können die Substanzen als solche in einem Öl oder Lösungsmittel gelöst, mittels Netz-, Haft-, Dispergier- oder Emulgiermittel in Wasser homogenisiert werden. Es können aber auch aus wirksamer Substanz Netz-, Haft-, Dispergier- oder Emulgiermittel und eventuell Lösungsmittel oder Öl bestehende Konzentrate hergestellt werden, die zur Verdünnung mit Wasser geeignet sind.

Als oberflächenaktive Stoffe kommen Alkali-, Erdalkali-, Ammoniumsalze von Ligninsulfonsäure, Naphthalinsulfonsäure, Phenolsulfonsäure, Alkylarylsulfonate, Alkylsulfate, Alkylsulfonate, Alkali- und Erdalkalisalze der Dibutylnaphthalinsulfonsäure, Laurylethersulfat, Fettalkoholsulfate, fettsaure Alkali- und Erdalkalisalze, Salze sulfatierter Hexadecanole, Heptadecanole, Octadecanole, Salze von sulfatiertem Fettalkoholglykolether, Kondensationsprodukte von sulfoniertem Naphthalin und Naphthalinderivaten mit Formaldehyd, Kondensationsprodukte des Naphthalins bzw. der Napthalinsulfonsäure mit Phenol und Formaldehyd, Polyoxyethylenoctylphenolether, ethoxyliertes Isooctylphenol, octylphenol, Nonylphenol, Alkylphenolpolyglykolether, Tributylphenylpolyglykolether, Alkylarylpolyetheralkohole, Isotridecylalkohol, Fettalkoholethylenoxid-Kondensate, ethoxyliertes Rizinusöl, Polyoxyethylenalkylether, ethoxyliertes Polyoxypropylen, Laurylalkoholpolyglykoletheracetal, Sorbitester, Lignin, Sulfitablaugen und Methylcellulose in Betracht.

Pulver-, Streu- und Umhüllungs-, Imprägnierungs- und Homogengranulate, können durch Bindung der Wirkstoffe an feste Trägerstoffe hergestellt werden. Feste Trägerstoffe sind Mineralerden wie Silicagel, Kieselsäuren, Kieselgele, Silikate, Talkum, Kaolin, Attaclay, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie z.B. Ammoniumsulfat, Ammoniumphosphat, Ammoniumnitrat, Harnstoffe und pflanzliche Produkte, wie Getreidemehl, Baumrinden-, Holz- und Nußschalenmehl, Cellulosepulver und andere feste Trägerstoffe.

Die Formulierungen enthalten zwischen 0,1 und 95 Gew.%, vorzugsweise zwischen 0,5 und 90 Gew.%, Wirkstoff. Beispielsweise enthält ein Mittel etwa 10 bis 80 Gew.-% Wirkstoff, etwa 30 bis 90 Gew.-% flüssige oder feste Trägerstoffe sowie ggf. bis zu 20 Gew.-% oberflächenaktive Stoffe. Es kann bei Bedarf auf eine geeignete Anwendungskonzentration verdünnt werden.

Die Mittel können durch Mischen mit üblichen Formulierungshilfsmitteln als Fertigformulierung zur Anwendung kommen. Ebenso ist die Anwendung in Form eines Tankmixverfahrens möglich.

Eine Förderung der Wirkung und der Wirkungsgeschwindigkeit kann z.B. durch wirkungssteigernde Zusätze wie organische Lösungsmittel, Netzmittel und Öle erzielt werden. Das läßt eine Minderung der Aufwandmenge des eigentlichen Wirkstoffes zu.

Die Mittel werden den Pflanzen vornehmlich durch Blattspritzung zugeführt. Dabei kann die Ausbringung z.B. mit Wasser als Trägerstoff durch übliche Spritztechniken mit Spritzbrühenmengen von etwa 100 bis 1000 l/ha erfolgen. Eine Anwendung der Mittel im sogenannten "Low Volume"- und "Ultra-low-Volume"-Verfahren ist ebenso möglich wie ihre Applikation in Form von sogenannten Mikrogranulaten.

Die erfindungsgemäße Mischung kann entweder für sich allein, in Mischung mit anderen Mitteln oder mit anderen Wirkstoffen angewendet werden.

Gegebenenfalls können andere Entblätterungs-, Desikkations-, Pflanzenschutz- oder Schädlingsbekämpfungsmittel je nach dem gewünschten Zweck zugesetzt werden.

Auch hat sich gezeigt, daß, wenn man die erfindungsgemäßen Mischungen z.B. die nachfolgend aufgeführten Wirkstoffen zusetzt, eine noch bessere Bekämpfung des unerwünschten Wiederaustriebs von Pflanzen nach der Desikkation bzw. Entblätterung bei Baumwolle erreicht wird. Der Entblätterungserfolg bleibt dabei aufrechterhalten oder wird sogar verstärkt:

(A) Herbizidaktive Wirkstoffe aus der Gruppe der

a. Chloracetanilide, wie das in DE-OS 26 48 008 beschriebene 2-Chlor-N-(2,6-dimethylphenyl)-N-(1H-pyrazol-1-ylmethyl)-acetamid (common name: Metazachlor),

b. Substituierte Chinolin-8-carbonsäuren, wie die in EP-A-104 389 beschriebene 3,7-Dichlor-chinolin-8-carbonsäure und die in EP-A-60 429 beschriebene 3-Methyl-7-chlor-chinolin-8-carbonsäure,

c. Cyclohexenonderivate, wie das in DE-OS 28 22 304 beschriebene 2[(1-Ethoxyimino)butyl]-5-[2-(ethyl-thio)-propyl]-3-hydroxy-2-cyclohexen-1-on (common name: Sethoxydim) und das in DE-OS 31 21 355 beschriebene 2-[1-(Ethoxyimino)butyl]-3-hydroxy-5-(2H-tetrahydrothiopyran-3-yl)-2-cyclohexen-1-on (common name: Cycloxydim),

d. Phenoxyalkancarbonsäuren, wie (4-Chlor-2-methyl-phenoxy)essigsäure,

e. 3-(Isopropyl)-1H-2,1,3-benzothiadiazin-4(3H)-on 2,2-dioxid, beschrieben in DE-OS 15 42 836 (Bentazon®),

f. Dinitroaniline wie das in der DE-OS 22 41 408 beschriebene N-(1-Ethylpropyl)-3,4-dimethyl-2,6-dinitroanilin,

g. Imidazolinone, z.B. die 2-[4,5-Dihydro-4-methyl-4-(1-methylethyl)-5-oxo-1H-imidazol-2-yl]-3-chinolincarbonsäure (Scepter®),

h. 3,4,5,6-Tetrahydrophthalimide wie das in der EP-A 0 240 659 beschriebene N-[5-(α-Chloracrylsäureethylester)-4-chlor-phenyl]-3,4,5,6-tetrahydrophthalimid.

i. Sulfonylharnstoffderivate wie die unter den Handelsnamen Glean®, Ally®, Express®, Logran®, Setoff®, Muster®, Londax®, Onst®, Classic®, Bacon® Harmony® oder Remedy® z.B. aus DE-A 2 715 786, den EP-A 7 687, 202 830, 44 808, 44 807, 136 061, 51 566, 7 687, 84 020, 30 142, 237 292, 232 067, US-Patent 4 547 215 oder Chemical Abstracts 102, 220 905 bekannten Verbindungen.

Bevorzugte Mischungspartner sind:

2-Methyl-6-ethyl-ethoxymethyl-2-chloracetanilid
2-Methyl-6-ethyl-N-(methoxy-1-methylethyl)-2-chloracetanilid
2,6-Dimethyl-N-(1-H-pyrazolyl-1-yl-methyl)-2-chloracetanilid
2,6-Diethyl-N-(methoxymethyl)-2-chloracetanilid
3-Methyl-7-chlor-chinolin-8-carbonsäuren (Salze, Ester)
3,7-Dichlor-chinolin-8-carbonsäure (Salze, Ester)
2-[(1-Ethoxyimino)butyl]-5-[2-(ethylthio)-propyl]-3-hydroxy-2-cyclohexan-1-on (Salze)
2-[(1-trans-chlorallyloxyimino)butyl]-5-[-2-(ethylthio)-propyl]-3-hydroxy-2-cyclohexan-1-on (Salze)
2-[(1-trans-chlorallyloximino)propyl]-5-[-2-(ethylthio)-propyl]-3-hydroxy-2-cyclohexan-1-on (Salze)
2-[(1-Ethoximino)butyl]-5-[-2-H-tetrahydrothiopyran-3-yl)-3-hydroxy-2-cyclohexan-1-on (Salze)
2-[(1-Ethoximino)propyl]-5-(2,4,6-trimethylphenyl)-3-hydroxy-2-cyclohexan1-on (Salze)
2-Methyl-4-chlorphenoxyessigsäure (Salze, Ester, Amide)
2-[2-Methyl-4-chlor-phenoxy]propionsäure (Salze, Ester, Amide)
4-[2-Methyl-4-chlor-phenoxy]-buttersäure (Salze, Ester, Amide)
4-[-2,4-Dichlorphenoxy]-buttersäure (Salze, Ester, Amide)
2-[-2,4-Dichlorphenoxy]-propionsäure (Salze, Ester, Amide)
2,4-Dichlorphenoxyessigsäure (Salze, Ester, Amide)
3,5,6-Trichlorpyridyl-2-oxyessigsäure (Salze, Ester, Amide)
3-(1-Methylethyl)-1-H-2,1,3-benzothiadiazin-4-(3H)-on-2,2-dioxid (Salze)
3-(1-Methylethyl)-1-cyan-2,1,3-(benzothiadiazin-4-(3H)-on-2,2-dioxid (Salze)
N-(1-Ethylpropyl)-3,4-dimethyl-2,6-dinitro-anilin
2-[4,5-Dihydro-4-methyl-4-(1-methylethyl)-5-oxo-1H-imidazol-2-yl]-3-chinolincarbonsäure
N-[5-(α-Chloracrylsäureethylester)-4-chlorphenyl]-3,4,5,6-tetrahydrophthalimid

(B) Defoliantien und Desikkantien, wie z.B. genannt in Cathey, G. W. (1986) Physiology of defoliation in cotton production, in "Cotton Physiology" (J.R. Mauney, J. McD. Stewart, eds.) The Cotton Foundation reference book series, No. 1, Chapter 14, 143-153 und in Morgan, P. W. (1985) Chemical manipulation of abscission and desiccation. In "Agricultural Chemicals of the Future" (J. L. Hilton, ed.) BARC Symposium 8, 61-74. Rowman & Allanheld, Totowa.

a. 6,7-Dihydrodipyridol (1,2-α:2',1'-c)pyridilium-Ion als Dibromid-Monohydrat Salz (common name: Diquat) und 1,1'-Dimethyl-4,4'-bipyridinium-Ion als Dichlorid oder Dimethylsulfatsalz (Common name: Paraquat).

b. (2-Chlorethyl)phosphonsäure (Ethrel®),

c. S,S,S-Tributylphosphortrithioat und S,S,S-Tributylphosphortrithioit,

d. 2,3-Dihydro-5,6-dimethyl-1,4-dithiin-1,1,4,4-tetraoxid (Harvade®),

e. Salze des N-(Phosphonomethyl)glycins, wie das Isopropylammoniumsalz (Roundup®),

f. Magnesium- und Natriumchlorat,

g. 1,2-Dihydropyridazin-3,6-dion,

h. 7-Oxabicyclo[2,2,1]heptan-2,3-dicarbonsäure (common name: Endothall),

Bevorzugte Mischungspartner sind:

2-Chlorethylphosphonsäure
S,S,S-Tributylphosphortrithioat und -trithioit
2,3-Dihydro-5,6-dimethyl-1,4-dithiin-1,1,4,4-tetraoxid
N-(Phosphonomethyl)glycine (Salze)
1,2-Dihydropyridazin-3,6-dion
Perchlorate
7-Oxabicyclo[2,2,1]heptan-2,3-dicarbonsäure (Salze, Ester, Amide)
1,1-Ethylen-2,2-bipyridylium-dibromid

(C) Wachstumsretardantien aus der Gruppe

a. Quartäre Ammoniumsalze aus der Gruppe der N,N-Dimethyl-azacycloheptaniumsalze, N,N-Dimethylpiperidiniumsalze, N,N-Dimethylhexahydropyridaziniumsalze, N,N-Dimethyltetrahydropyridaziniumsalze, N-Methyl-pyridiniumsalze, N,N-Dimethyl-pyrrolidiniumsalze und N,N,N-Trimethyl-N-2-chlorethylammoniumsalze, insbesondere das N-2-Chlorethyl-N-trimethylammoniumchlorid (Common name: Chlormequatchlorid) und das N,N-Dimethylpiperdiniumchlorid (Common name: Mepiquatchlorid),

b. Pyrimidinverbindungen wie aus US 3 818 009 und aus Journal of Plant Growth Regulation 7:27, 1988, bekannt (z.B. die mit dem common name: Ancymidol oder Flurprimidol),

c. Pyridinverbindungen die aus DE-A-30 15 025 bekannt sind,

d. Norbornadiazetine, wie sie in den DE-OS 26 15 878 und 27 42 034 beschrieben sind,

e. Wachstumsregulatorisch wirksame Triazolverbindungen wie sie in der europäischen Anmeldung 88104320.2, in British Crop Protection Conference - Weeds 1982, Vol. 1, BCPC Publications, Croydon, 1982, Seite 3, in Plant Cell Physiol. 25, 611, in Pestic. Sci. 19, 153, in J. Agron. Crop. Sci. 158, 324 oder in J. Plant Growth Regul. 4, 181, beschrieben sind, z.B. 1-Phenoxy-3-(1H-1,2,4-triazol-1-yl)-4-hydroxy-5,5-dimethylhexan,

f. 2-Acyl-3-hydroxycyclohex-2-en-1-one wie in EP-A-126 713 oder 123 001 beschrieben,

g. 1-(4-Chlorphenoxy)-3,3-dimethyl-1-[1,2,4-triazol-1-yl]-butan-2-on (Common name: Triadimefon)
N-[2,4-Dimethyl-5-[trifluromethyl-sulfonylamino]phenyl-acetamid (common name: Mefluidide)
2-Chlor-2',6'-diethyl-N-[methoxymethyl]-acetanilid (common name: Alachlor)
S-Ethyl-dipropylthiocarbamat (common name: EPTC)
Bernsteinsäure-2,2-dimethylhydrazid (common name: Daminozid)

Bevorzugte Mischungspartner sind:

N,N,N-Trimethyl-N-2-chlorethylammoniumsalze
N,N-Dimethylpiperidiniumsalze
N-Methylpyridiniumsalze
α-Cyclopropyl-α-(4-methoxyphenyl)-5-pyrimidin-methanol
α-Cyclopropyl-α-(4-trifluormethoxyphenyl)-5-pyrimidin-methanol
5(4-Chlorphenyl)3,4,5,9,10-pentaaza-tetracyclo[5,4,1,$0^{2}$,$^{6}$,$0^{8}$,$^{11}$]-dodeca-3,9-dione
all-cis-8-(4-Chlorphenyl)-3,4,8-triazatetracyclo[4,3,1,0,$0^{2}$,$^{5}$,$0^{7}$,$^{9}$]-dec-3-on
Bernsteinsäure-mono-N,N-dimethylhydrazid
N,N-Dipropylthiolcarbaminsäure-ethylester
N-2,4-Dimethyl-5-(trifluormethyl)-sulfonylamino-phenyl-acetamid
1-(4-Chlorphenoxy-)3,3-dimethyl-1-(1,2,4-triazol-1-yl)-2-butanon
2-Propylcarbonyl-5-ethoxycarbonyl-3-hydroxy-2-cyclohexen-1-on
1-(1,2,4-Triazol-1-yl)-1-methoxy-2-(2,4-dichlorphenyl)-propanol-2
2,2-Dimethyl-4-(1,2,4-triazol-1-yl)-6-phenoxy-hexanol-3
2,2-Dimethyl-4-(1,2,4-triazol-1-yl)-6-(4-chlorphenyl)-pentanol-3
2,2-Dimethyl-4-(1,2,4-triazol-1-yl)-5-(4-Chlorphenyl)-penten-4-ol-1
2,2-Dimethyl-4-(1,2,4-triazol-1-yl)-5-cyclohexyl-penten-4-ol-3
1(5-Methyl-1,3-dioxan-yl-5)-4-(1,2,4-triazol-1-yl)-4-(4-trifluormethylphenyl)-propen-2-ol.

Anwendungsbeispiele

Als Vergleichsmittel dienten die Einzelwirkstoffe N-Phenyl-N'-(1,2,3-thiadiazol-5-yl)-harnstoff (I.1 und 5-[2-Chlor-4-trifluormethyl)phenoxy]-2-nitrobenzoesäure-natriumsalz II.2 sowie 5-[2-Chlor-4-trifluormethyl)phenoxy]-2-nitrobenzoesäure(ethoxycarbonylmethyl)ester II.5.

Die Wirkstoffe wurden in Form ihrer fertig formulierten Handelsprodukte verwendet. Die Angaben zur mengenbezogenen Wirkung beziehen sich auf den Wirkstoffanteil.

Die Wassermenge der Formulierungen betrug umgerechnet 1000 l/ha.

Als Testpflanzen dienten junge, 5- bis 6-blättrige (ohne Keimblätter) Baumwollpflanzen der Sorte Stoneville 825.

Anwendungsbeispiel 1

Die Baumwollpflanzen wurden unter Gewächshausbedingungen angezogen (Tag-/Nachttemperatur 20/13°C, rel. Luftfeuchtigkeit 50 bis 70 %) und tropfnaß mit wäßrigen Aufbereitungen (unter Zusatz von 0,15 Gew.% des Fettalkoholalkoxylats Plurafac® LF 700, bezogen auf die Spritzbrühe) der angegebenen Wirkstoffe blattbehandelt. 7 Tage nach Wirkstoffapplikation wurde die Anzahl abgeworfener Blätter und der Grad der Entblätterung in % bestimmt. Bei den unbehandelten Kontrollpflanzen trat kein Blattfall auf.

| Mittel, enthaltend Wirkstoff-Nr. | umgerechnete Aufwandmenge [kg/ha] | Entblätterung [%] |
|---|---|---|
| I.1 (Dropp®) | 0,125 | 0 |
| | 0,500 | 6 |
| II.2 (Blazer®) | 0,062 | 20 |
| | 0,125 | 78 |
| | 0,250 | 88 |
| I.1 + II.2 | 0,125 + 0,062 | 62 |
| I.1 + II.2 | 0,125 + 0,250 | 93 |

Insbesondere bei ungünstigen, kühlen Temperaturbedingungen wird durch das Zusammenwirken der Wirkstoffe I.1 und II.2 ein synergistischer Effekt beobachtet.

Anwendungsbeispiel 2

Junge Baumwollpflanzen wurden unter Gewächshausbedingungen angezogen (Tag/Nachttemperatur 21/15°C, relat. Luftfeuchte 50-70 %) und tropfnaß mit wäßrigen Aufbereitungen der angegebenen Wirkstoffe (unter Zusatz von 0,15 Gew.% des Fettalkoholalkoxylates Plurafac® LF 700, bezogen auf die Spritzbrühe) blattbehandelt. 7 Tage nach Wirkstoffapplikation wurde die Anzahl abgeworfener Blätter bestimmt und der Grad der Entblätterung in % bestimmt. Bei den unbehandelten Kontrollpflanzen trat kein Blattbefall auf.

| Mittel, enthaltend Wirkstoff-Nr. | umgerechnete Aufwandmenge [kg/ha] | Entblätterung [%] |
|---|---|---|
| I.1 (Dropp®) | 0,016 | 0 |
| | 0,030 | 6 |
| II.5 (Superblazer®) | 0,030 | 62 |
| | 0,062 | 83 |
| I.1 + II.5 | 0,016 + 0,062 | 94 |

Insbesondere bei ungünstigen, kühlen Temperaturbedingungen wird durch das Zusammenwirken der Wirkstoffe I.1 und II.5 ein synergistischer Effekt beobachtet.

**Patentansprüche**

1. Synergistische Mischung zur Abszission von Pflanzenteilen, gekennzeichnet durch einen wirksamen Gehalt an

   a) mindestens einem Harnstoffderivat der Formel I

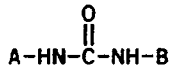 (I),

in der A für einen heteroaromatischen Rest A-1 bis A-3

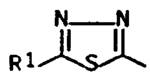 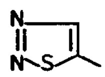 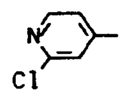

A-1 A-2 A-3

oder einen substituierten Phenylrest A-4

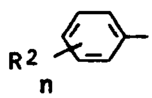

A-4

steht, wobei $R^1$ Wasserstoff oder Methyl, $R^2$ Fluor, Chlor oder Brom und n eine Zahl 1, 2 oder 3 bedeuten und in der B für einen Cyclopentyl- oder Cyclohexylrest oder einen unsubstituierten oder ein- bis dreifach durch Fluor, Chlor oder Brom substituierten Phenylrest steht sowie
b) mindestens einem Diphenyletherderivat der Formel II

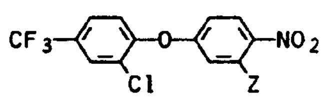 (II),

in der Z für einen Rest

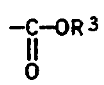 , 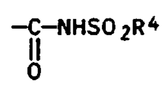

oder $OR^4$
steht, worin $R^3$ Wasserstoff, ein Alkalimetall- oder Erdalkalimetallion, gegebenenfalls substituiertes Ammonium, Alkyl mit 1 bis 4 C-Atomen oder Alkoxycarbonylalkyl mit insgesamt 1 bis 6 C-Atomen und $R^4$ Alkyl mit 1 bis 4 C-Atomen bedeuten, wobei die Komponenten I und II im Gew.-Verhältnis von 1 : 0,01 bis 1 : 50 enthalten sind.

**2.** Synergistische Mischung gemäß Anspruch 1, dadurch gekennzeichnet, daß die Komponenten I und II im Gew.-Verhältnis von 1 : 0,2 bis 1 : 20 enthalten sind.

**3.** Synergistische Mischung zur Abszission von Pflanzenteilen, gekennzeichnet durch einen wirksamen Gehalt an N-Phenyl-N'-(1,2,3-thiadiazol-5-yl)-harnstoff I.1 und 5-[2-Chlor-4-(trifluormethyl)-phenoxy]-2-nitrobenzoesäure II.1 oder dessen Natriumsalz II.2, wobei die Komponenten I.1 und II.1 bzw. II.2 im Gew.-Verhältnis 1 : 0,2 bis 1 : 10 enthalten sind.

**4.** Synergistische Mischung zur Abszission von Pflanzenteilen, gekennzeichnet durch einen wirksamen Gehalt an N-Phenyl-N'-(1,2,3-thiadiazol-5-yl)-harnstoff I.1 und 5-[2-Chlor-4-trifluormethyl)-phenoxy]-2-nitrobenzoesäure-(ethoxycarbonylmethyl)ester II.5, wobei die Komponenten I.1 und II.5 im Gew.-Verhältnis 1 : 0,2 bis 1 : 10 enthalten sind.

**5.** Verfahren zur Abszission von Pflanzenteilen, dadurch gekennzeichnet, daß man Mittel gemäp den Ansprüchen 1 bis 4 auf Pflanzen einwirken läßt.

6. Verwendung von Mitteln gemäp den Ansprüchen 1 bis 4 zur Entblätterung von Baumwollpflanzen.

## Claims

1. A synergistic mixture for the abscission of parts of plants, which comprises an effective content of
   a) one or more urea derivatives of the formula I

(I) 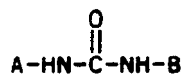 . (I)

where A is a heteroaromatic radical A-1 to A-3

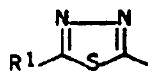

A-1

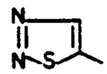

A-2

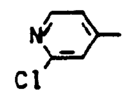

A-3

or a substituted phenyl radical A-4

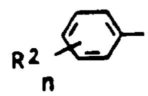

A-4

where $R^1$ is hydrogen or methyl, $R^2$ is fluorine, chlorine or bromine, n is 1, 2 or 3 and B is cyclopentyl or cyclohexyl or is phenyl which is unsubstituted or mono-substituted to trisubstituted by fluorine, chlorine or bromine, and
b) one or more diphenyl ether derivatives of the formula II

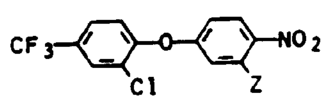 (II)

where Z is a radical

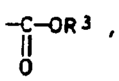 , 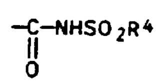

or $OR^4$
where $R^3$ is hydrogen, an alkali metal ion or alkaline earth metal ion, unsubstituted or substituted ammonium, alkyl of 1 to 4 carbon atoms or alkoxycarbonylalkyl having a total of 1 to 6 carbon atoms and $R^4$ is alkyl of 1 to 4 carbon atoms, the components I and II being present in a weight ratio of from 1 : 0.01 to 1 : 50.

2. A synergistic mixture as claimed in claim 1, wherein the components I and II are present in a weight ratio of from 1 : 0.2 to 1 : 20.

3. A synergistic mixture for the abscission of parts of plants, which comprises an effective content of N-phenyl-N'-(1,2,3-thiadiazol-5-yl)-urea I.1 and 5-[2-chloro-4-(trifluoromethyl)-phenoxy]-2-nitrobenzoic acid II.1 or its sodium salt II.2, the components I.1 and II.1 or II.2 being present in a weight ratio of from 1 : 0.2 to 1 : 10.

4. A synergistic mixture for the abscission of parts of plants, which comprises an effective content of N-phenyl-N'-(1,2,3-thiadiazol-5-yl)-urea I.1 and ethoxycarbonylmethyl 5-[2-chloro-4-(trifluoromethyl)-phenoxy]-2-nitrobenzoate II.5, components I.1 and II.5 being present in a weight ratio of from 1 : 0.2 to 1 : 10.

5. A method for the abscission of parts of plants, wherein an agent as claimed in claim 1 or 2 or 3 or 4 is allowed to act on plants.

6. Use of an agent as claimed in claim 1 or 2 or 3 or 4 for the defoliation of cotton plants.

## Revendications

1. Mélange synergique pour l'abscission de parties végétales, caractérisé par une teneur efficace en
a) au moins un dérivé d'urée de formule I

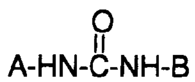 (I),

dans laquelle A représente un reste hétéro-aromatique A-1 à A-3

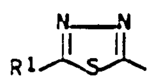
A-1

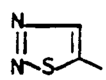
A-2

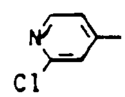
A-3

ou un reste phényle substitué A-4

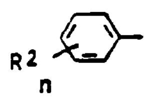
A-4

$R^1$ représentant hydrogène ou méthyle, $R^2$ fluor, chlore ou brome et n un des nombres 1, 2 ou 3 et B représentant un reste cyclopentyle ou cyclohexyle ou un reste phényle non substitué ou substitué une à trois fois par fluor, chlore ou brome, ainsi que
b) au moins un dérivé d'éther diphénylique de formule II

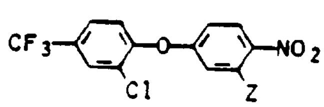 (II),

dans laquelle Z représente un reste

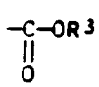 , 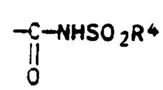

ou $OR^4$
où R3 représente hydrogène, un ion métal alcalin ou alcalino-terreux, ammonium éventuellement substitué, alkyle à 1 à 4 atomes C ou alcoxycarbonylalkyle ayant au total 1 à 6 atomes C et R4 représente alkyle à 1 à 4 atomes C, les composants I et II étant contenus en un rapport en poids de 1/0,01 à 1/50.

2. Mélange synergique selon la revendication 1, caractérisé par le fait que les composants I et II sont contenus en un rapport en poids de 1/0,2 à 1/20.

3. Mélange synergique pour l'abscission de parties végétales, caractérisé par une teneur efficace en N-phényl-N'-(1,2,3-thiadiazol-5-yl)-urée I.1 et en acide 5-[2-chloro-4-(trifluorométhyl)-phénoxy]-2-nitrobenzoïque II.1 ou son sel sodique II.2, les composants I.1 et II.1 ou II.2 étant contenus en un rapport en poids de 1/0,2 à 1/10.

4. Mélange synergique pour l'abscission de parties végétales, caractérisé par une teneur efficace en N-phényl-N'-(1,2,3-thiadiazol-5-yl)-urée I.1 et en ester (éthoxycarbonylméthylique) d'acide 5-[2-chloro-4-trifluorométhyl)-phénoxy]-2-nitrobenzoique II.5, les composants I.1 et II.5 étant contenus en un rapport en poids de 1/0,2 à 1/10.

5. Procédé pour l'abscission de parties végétales, caractérisé par le fait que l'on fait agir sur les plantes des agents selon les revendications 1 à 4.

6. Utilisation d'agents selon les revendications 1 à 4 pour la défoliation du coton.